# EUROPEAN PATENT APPLICATION

(11) **EP 2 221 719 A1**
(43) Date of publication of application: **25.08.2010**
(21) Application number: 10001497.6
(22) Date of filing: 15.02.2010
(51) Int. Cl.: G06F 9/44

(54) **Next-step prediction system and method**

(30) Priority: 23.02.2009 IL 19719609
(71) Applicant: Deutsche Telekom AG, 53113 Bonn (DE)
(72) Inventor: Rokach, Lior, Omer 84965 (IL); Antwarg, Liat, Ganey Tiqva 55900 (IL); Shapira, Bracha, Beer-Sheva 84728 (IL)
(74) Representative: Flaccus, Rolf-Dieter

(57) **Abstract**

The invention relates to a next-step prediction method for assisting a user in operating a device. The method comprises the steps of: (A) In a training phase: (a) creating for each device at least one application model, each of said application models having a form of a directed graph, wherein each node in the graph represents one screen of said application, wherein one or more starting screens *B* and one or more goal screens *G* are also respectively indicated in said graph, and wherein each arrow in the graph represents a screen input element for initiating transfer from one screen to a next one; (b) predefining a set of user characteristics and device types; (c) providing various types of devices to a group of training users for operation during a training period, and recording during operation of each training user of each device the corresponding sequences of screens that the user goes through; (d) having obtained plurality of said recorded screen sequences, as performed by said plurality of training users, and having knowledge of each training user characteristics, and the device he operated during said training period, creating for each device and specific collection of user characteristics, a user prediction model which provides on said application model the probabilities for transfers from each screen to a next one; and (e) installing a user prediction model within each specific device, wherein said user prediction model is the one which best suites both the characteristics of the user who operates the device, and the specific device; and (B) in real-time phase: (f) while operating the device by the user, tracking in real time each present screen which is displayed, and based on said user prediction model, predicting the goal that the user wishes to accomplish, and further determining for each presently displayed screen the next screen that the user most likely need s according to the transfer probabilities in said user prediction model, and providing guidance for the user to proceed to said next screen.

## Description

### Field of the Invention

The present invention relates to the field of intention prediction. More particularly, the invention relates to assisting users while interacting with a sequential system, based on predicting their intentions.

### Background of the Invention

Intention prediction is the basis for predicting user's next steps while performing a sequence of actions in a system. Intention prediction is also known as intention recognition and plan recognition. Identifying the intention of the user and predicting the next step within a sequence of his interactions with a system can be used to improve the service provided to users by adjusting the interface to their needs. Once user's intention is identified assistance or recommendation may be provided to the user.

Significant difficulties are experienced by users while interacting with complex programmable devices having multiple commands or applications.
Further, when a user attempts to use an uncommon or rarely used function of these devices, he will encounter difficulties in most cases. For example, studies have concluded that 80% of users cannot correctly program their VCRs. This is due, in part, to the fact that manufacturers and services providers continue to add more features and applications to existing devices, without simplifying those which already exist. Another problem is the failure of manufacturers to design products in which the control interface and applications sequences adapts to the behavior of the user or to allow a system to be adaptive to the behaviors of a plurality of users.

In recent years marketing of digital devices to customers is mostly based on the variety of the applications supported by each device. Even more than the hunger of costumers to new stimulating applications, operators and service providers share a strong desire that costumers will exploit the applications provided by them. The profit of operators and service providers is directly proportional to the frequency of using their applications. Thus, a drop in usage percentage due to applications complexity, generally results in a drop in profits.

System application generally consists of several goals that the user may accomplish after executing a sequence of actions. For example, executing a sequence in an application such as e-mail usually ends when the user accomplishes the desired goal (i.e. send-email, add-contact etc).

Intention prediction has become a very active research area lately. One example is the Lumiere Project (Horvitz E., Breese J., Heckerman D., Hovel D., and Rommelse K. The Lumiere project: Bayesian user modeling for inferring the goals and needs of software users. In Proceedings of the Fourteenth Conference on Uncertainty in Artificial Intelligence, pages 256--265, Madison, WI, 1998) which aimed at leveraging methods for reasoning under uncertainty about the goals of software users using Bayesian user models. The models can be employed to infer user's needs by considering a user's background, actions and queries. The Lumiere project uses Markov representation of the temporal Bayesian user-modeling problem by considering dependencies among variables at adjacent time periods. Another example is an intelligent wheelchairs research (Taha T., Valls M.J., Dissanayake G. POMDP-based long-term user intention prediction. Proceedings of the IEEE 2008 International Conference on Robotics and Automation (ICRA'08) - accepted for publication, May, 2008) which presents a technique to predict the wheelchairs users' intended destination at a larger scale (and not only locations immediately surrounding the wheelchair). The system relies on minimal user input obtained from a standard wheelchair joystick - together with a learned Partially Observable Markov Decision Process (POMDP). Another example is US 2009/0164395 which predicts user behavior as the user navigates the Web. Mechanisms model user behavior using predictive models, such as discrete Markov processes, where the user's behavior transitions between a finite number of states. Even though these methods predict user's intentions using one of Markov models, they do not refer to personal aspects of the user such as user characteristics. Creating an intention prediction model that can not be trained automatically according to the user's characteristics decreases the accuracy of prediction.

Few works have been done to predict user's intentions while surfing the web. Chen et al. (Chen, Z., Lin, F., Liu, H., Liu, Y., Ma, W., and Wenyin, L. User Intention Modeling in Web Applications Using Data Mining. World Wide Web 5, 3 (Nov. 2002), 181-191. 2002) used a modified Naive Bayes classifier algorithm to support incremental learning for modeling the user's intended action on a computer. Sun et al. (Sun X., Chen Z., Liu W., and. Ma W.Y. Intention modeling for web navigation. In Proceedings of the 11th World Wide Web Conference (WWW), 2002) presented a method for predicting the user's browsing intention based on the web page sequences he had previously visited. The proposed method employs a multi-step dynamic n-gram model. TaskPredictor (Shen, J., Li, L., Dietterich, T. G., and Herlocker, J. L. A hybrid learning system for recognizing user tasks from desktop activities and email messages. In Proceedings of the 11th international Conference on intelligent User interfaces (Sydney, Australia, January 29 - February 01, 2006). IUI '06. ACM, New York, NY, 86-92. DOI= http://doi.acm.org/10.1145/1111449.1111473. 2006.) is a machine learning system that attempts to predict the user's current activity. First feature selection, a threshold for making classification decisions and Naive Bayes are applied to decide whether to make a prediction. Then, a discriminative model (linear support vector machine) is applied to make the prediction itself. However, those works treats the task prediction problem as a traditional supervised learning problem, and ignored the sequential aspect of the problem.

US 6,418,424 discloses an adaptive interface for a programmable system, for predicting a desired user function, based on user history, as well as machine internal status and context. A predicted input is presented for confirmation by the user, and the predictive mechanism is updated based on this feedback. The system optionally includes an actuator for effecting the environment of operation, allowing closed-loop feedback operation and automated learning. However, such interface does not take into consideration the differences in usage behavior between various user types for predicting users' intention.

It is therefore an object of the present invention to provide a method for predicting user's intention while performing a sequence of actions in a system.

It is another object of the present invention to predict in real time the goal which the user intends to reach using the personal characteristics of the specific user, and to assist him based on the knowledge of this goal.

It is another object of the present invention to predict user's next steps while the user performs a sequence of actions in a system.

It is another object of the present invention to create an intention prediction model that is trained automatically according to the user's characteristics and sequences of actions in the system.

It is another object of the present invention to provide an intention prediction model that increases the accuracy of prediction.

It is another object of the present invention to provide an intention prediction model that accurately and in real time assists users having interaction difficulties.

It is yet another object of the present invention to provide a method for improving the services provided to users by simplifying their interactions with the system.

It is still an object of the present invention to provide a method for increasing profits from services by increasing the usage of services' applications.

Other objects and advantages of the invention will become apparent as the description proceeds.

### Summary of the Invention

The invention relates to a next-step prediction method for assisting a user in operating a device. The method comprises the steps of: (A) **In a training phase:** (a) creating for each device at least one application model, each of said application models having a form of a directed graph, wherein each node in the graph represents one screen of said application, wherein one or more starting screens *B* and one or more goal screens *G* are also respectively indicated in said graph, and wherein each arrow in the graph represents a screen input element for initiating transfer from one screen to a next one; (b) predefining a set of user characteristics and device types; (c) providing various types of devices to a group of training users for operation during a training period, and recording during operation of each training user of each device the corresponding sequences of screens that the user goes through; (d) having obtained plurality of said recorded screen sequences, as performed by said plurality of training users, and having knowledge of each training user characteristics, and the device he operated during said training period, creating for each device and specific collection of user characteristics, a user prediction model which provides on said application model the probabilities for transfers from each screen to a next one; and (e) installing a user prediction model within each specific device, wherein said user prediction model is the one which best suites both the characteristics of the user who operates the device, and the specific device; and (B) in real-time phase: (f) while operating the device by the user, tracking in real time each present screen which is displayed, and based on said user prediction model, predicting the goal that the user wishes to accomplish, and further determining for each presently displayed screen the next screen that the user most likely need s according to the transfer probabilities in said user prediction model, and providing guidance for the user to proceed to said next screen.

In an embodiment of the invention, the preparation of the user prediction model is performed using a Hidden Markov Model.

Preferably, the user prediction model has a form of a directed graph, and includes: (a) indication of all screens; (b) arrows indicating possible transfers between screens; and (c) probability for each transfer between screens, based on a specific collection of user characteristics and on the specific model the device.

Preferably, the specific collections of user characteristics selected for building the user prediction models in the training phase are those providing the highest gain ratio.

Preferably, the goal which is predicted as the one that the user wishes to accomplish is the one having maximum likelihood given the user prediction model and one or more of the real time tracked screens.

In an embodiment of the invention, said calculation of the maximum likelihood is performed using Forward-Backward algorithm.

The invention also relates to a prediction system for assisting a user in operating a device, which comprises: (a) at least one application model, each application model having a form of a directed graph, wherein each node in the graph represents one screen of said application, wherein one or more starting screens *B* and one or more goal screens G are also respectively indicated in said graph, and wherein each arrow in the graph represents a screen input element for initiating transfer from one screen to a next one; (b) a user prediction model, which indicates on each arrow of the application model showing a possible transfer by the user from one screen to a next one the probability for this transfer in comparison with other options that the user has, and wherein this user prediction model is specifically made to suit the known characteristics of the user and the specific device model; and (c) A device tracker for tracking in real time the present screen which is displayed to the user, submitting indication for said present screen to said user prediction model, extracting from said user prediction model the one or more probabilities for the possible transfers from this present screen to the next ones, and displaying indication to the user for the next screen which he will most likely needs to activate.

In one embodiment of the invention the system comprises a next screen indication that shows the button on which the user has to press in order to transfer to said next screen which he will most likely needs to activate.

In an embodiment of the invention, the next screen, when displayed, is modified to include screen elements that the user most likely wishes to reach, based on the predicted goal.

### Brief Description of the Drawings

In the drawings:
- Fig. 1 shows an exemplary application model 10, comprising one goal;
- Fig. 2 shows an exemplary user prediction model which is prepared for the application model of Fig. 1, wherein, transitions probabilities between screens appear by each edge in the user prediction model;
- Fig. 3 shows a general structure of the next-step prediction system 300 according to an embodiment of the invention;
- Fig. 4 is a flow diagram for the training process;
- Fig. 5 is a general example of a tree which is created using the offline stage of the process of the present invention; and
- Figs. 6a, 6b, and 6c illustrate respectively a sequence of three screens for guiding a user of a mobile phone during performance of a task according to an embodiment of the present invention.

### Detailed Description of the Invention

The present invention assists users in interacting with a sequential interactive system. The assistance is based on predicting in general the intended goal the user wishes to accomplish, and in particular the step that he will most likely proceeds in, and based on this prediction providing him with a corresponding help or a proposed interactive next step to continue. In general terms, the system of the invention provides within the user device a prediction model, particularly adapted to the known characteristics of the specific user and the device he uses, which is used in real time to propose the user with a next step to continue, or with a suitable help screen. The system of the invention utilizes personal user characteristics to increase the accuracy of prediction.The present invention predicts the user's goal and specifically the next action based on a user prediction model, from which the user sequence of actions is followed. The user prediction model is a model which provides most likelihood transfers between screens, based on the characteristics of the specific user who operates the device (such as his gender, his age, his occupation, etc.) and the specific device that he operates. The term "goal", refers herein to the final object that the user wishes to accomplish. For example, in an SMS application, the final goal may be the final step of sending of the SMS, i.e., pressing the "send" button. In a "contacts" application, the final goal is the final step of saving a new contact and his corresponding details. It is very important for the next-step prediction to be accurate, taking into consideration the differences in usage behaviors between various types of users.

A mobile device enables the user to perform many different tasks. Executing a task helps to accomplish a specific goal. The whole software of the device is referred to herein as a "software package", while a software module which performs several connected tasks is referred to herein as "application". According to the present invention, the user prediction model is divided into sub-models, one sub-model for each goal.

Although the present invention is particularly useful in predicting the user next-action in a mobile device (and the examples given herein refer to mobile devices), the invention can likewise be used in stationary devices.

When a user invokes an application, for example, on a cellular phone, he usually has a goal in mind that he wishes to complete - for example, sending an SMS or email message, adding a contact to the phone contact list, selecting an address for surfacing the Internet, etc. In order to accomplish the goal, the user interactively goes through a series of screens until the task is completed. Every screen is composed of *Screen Input Elements* (*SIE*) *-* some of which are used for data input, while others advance the user to one selected from several possible screens.

An *activity-path* is the sequence of screens that the user goes through along with the screen input elements that were used for inter-screen transitions.

According to the present invention, the whole software package of the device is modelled, including its various applications. Each application may include performance of several tasks, wherein each task generally ends with a goal screen. A goal in an SMS application is, for example, the screen on which a message "sending the message" appears. An application may include several tasks that end with one goal or several tasks that end with several different goals. For the sake of brevity, the following description will assume that an application comprises one starting screen (starting point) and one goal (end point). The starting point of an application is generally the opening screen of the application.

According to the present invention, an application model is built in a form of a directed graph. Each node in the directed graph indicates a specific screen, and each arrow in the graph indicates a possible interactive transfer from one screen to a next one. More specifically, the application model is a schematic description which describes all the possible interactive flows that are possible for execution from the starting point of the application and until reaching the goal. An element of a menu appearing on the device screen by which the user can interact with the application is defined as a Screen Input Element (*SIE*). The last screen or *SIE* which finalizes the execution of a task, for example a final *confirm SIE* in an application for purchasing goods, or a *send SIE* in an email or SMS applications are defined as a goal.

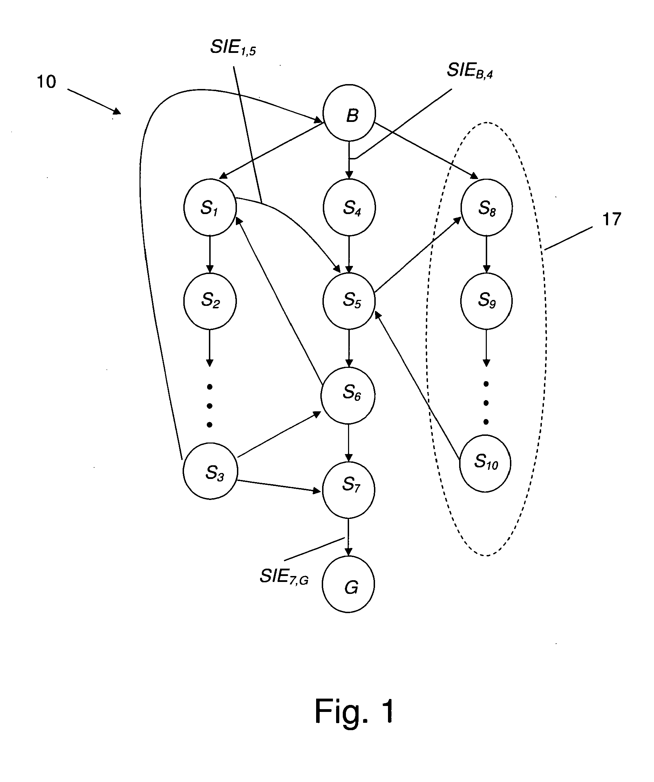

Fig. 1 shows an exemplary application model 10 comprising one goal only, which is prepared in a form of a directed graph. Screen ***B*** is the starting screen of the application, screen ***G*** is the goal screen, and other nodes represent additional screens that are available and may optionally be activated during the execution of the application. The arrows between the screens of the model correspond to *SIE*s that are used for inter screen transitions. For example, ***SIE**_{1,5}* indicates the screen input element which enables the transition from screen ***S**₁* to screen ***S**₅. **SIE**_{B,4}* indicates the screen input element which enables the transition from screen ***B*** to screen *S₄. **SIE**_{7,G}*indicates the screen input element which enables the transition from screen ***S**₇* to the goal screen ***G**.* The right branch 17 of the graph 10 represents a sub-flow of the application. For example, if application 10 is an SMS application, it may have a sub-flow *S₈-S₁₀* enabling spell checking of the SMS content. After the user types the SMS content in screen *S₅,* the user activates the spell check by means of *SIE_{5,8}* and after completing the spell check in screen *S₁₀*the user returns to screen *S₅*by means of *SIE*_{*10,5*.}

The application model generally includes:
1. All the various screens of the application, wherein each screen receives a unique index (hereinafter the "screen index"), for example, in a form of *S₁*. In some cases, a more complicated index may be applied, such as *S₇₋₁₆,* meaning the 16^{th} screen of application number 7 (however, as noted, for the sake of brevity the following description assumes use of only one application).
2. One or more starting screens *B*;
3. One or more *goal* screens *G*;
4. Various *SIEs*, each describing a possible transfer from one screen to a next one;

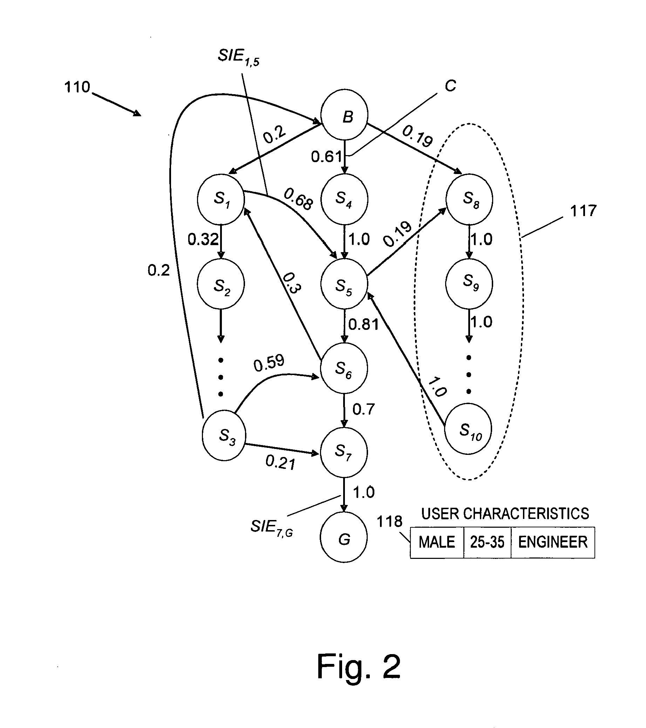

According to the present invention, a user prediction model is provided in each device. Fig. 2 shows an exemplary user prediction model 110 which is prepared for the application model 10 of Fig. 1. The user prediction model 110 is essentially the application model of Fig. 1, with the addition of all the probabilities of possible transfers between the various screens of the model. Generally, transitions probabilities from each screen should be summed to 1. Each user prediction model comprises screens transfer probabilities for all the tasks supported by the device. The probabilities of each user prediction model are set according to a collection of characteristics most suited to the user and the device model. For example, a user who is a male engineer at the age of 25-35 (118 in Fig. 2) which is located in screen *B* will most likely continue to screen *S₄* (probability of 0.61), although there is some possibilities that he will continue from screen *B* to screen *S₁* (probability of 0.2) or to screen *S₈* (probability of 0.19). Likewise, a user who is located in screen *S₆* will most probably continue to screen *S₇* (probability of 0.7), although there is some possibility that he will continue to screen *S₁* (probability of 0.3).

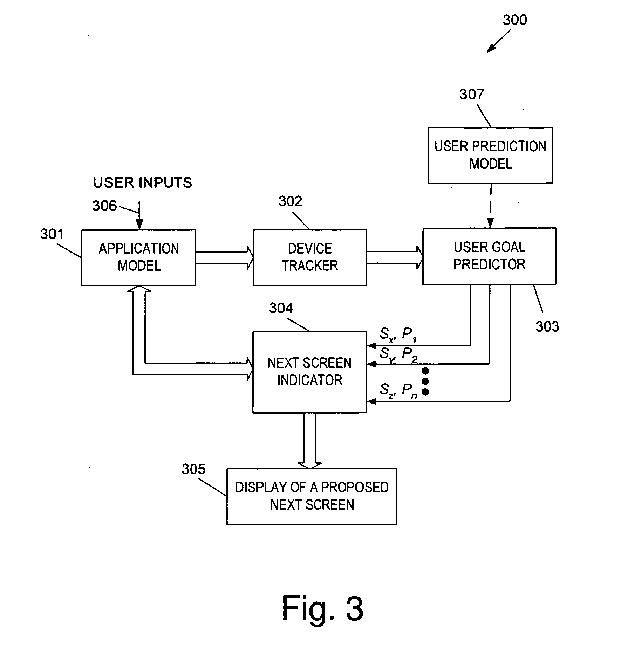

Fig. 3 shows a general structure of the next-step prediction system 300 according to an embodiment of the invention. Application model 301 displays at each given time a selected screen to the user, which is based on the specific *SIE* 306 as entered by the user. Therefore, by entering the sequential *SIE*s, the user sequentially progresses through various screens and stages of the selected device application that he currently operates. Device tracker 302 receives at any given time an indication regarding to the screen which is presently displayed, and submits this indication to the user goal predictor 303. The user goal predictor provides, given the tracked screens and the user prediction model 307, plurality of pairs of indications of the predicted goal. The first action performed by the user goal predictor is predicting the goal which the user intends to execute. In order to predict which goal the user intends to perform, each sub-model in the user prediction model is inspected. Then, the transition matrix in the most relevant sub-model is extracted. According to one embodiment the likelihood of the current performed session is calculated given each sub-model using Forward-Backward algorithm. The sub-model having maximal calculated likelihood is selected as the goal the user intends to accomplish.

Once the goal is selected, the user goal predictor provides accordingly all the pairs indicating a possible next screen, and the corresponding probability that the user will select to proceed to this next screen. More specifically, the pairs may have the form of *Sₓ,P₁*; *S_{y},P_{y}*; ...etc. The next screen indicator 304 inspects all the pairs he receives, and given said pairs it decides which screen among the pairs is most probable, and it displays a proposal screen 305 for the user indicating the input he needs to select in order to approach the most preferred next screen. In some cases, this proposal is a help screen, in case that the prediction model shows that a user of this type will most probably need (or generally asks) a help screen at this stage in order to decide regarding the next step. In another embodiment the next screen presented changes 'on the fly' so it is actually displaying elements which fit most to the predicted goal and the predicted next steps.

In an embodiment of the present invention, the user prediction model is based on a Hidden Markov Model (HMM). More specifically, the user prediction model which includes probabilities for transfers between screens is prepared beforehand (in the training), and it provides in real time operation of the device the probabilities for the next step. Based on these probabilities, the system assists the user in a most efficient manner.

As noted above, the user prediction model is prepared in a manner which most suits the specific user who operates the device, and the model of the specific device. In order to find the best suited prediction model, several user characteristics are defined, such as, the user gender, the user position within several ranges of ages (for example, the ranges of ages may be 7-12; 13-17, 17-25, 25-35, 35-45, 45-60, and 60+), the user occupation, etc.. The following discussion illustrates how several user prediction models are prepared in a manner that enables the installation within the user device of the most suited user prediction model.

The user prediction model applies personal aspects such as user characteristics (demographic data) to increase the accuracy of prediction. The initial preparation for the training process involves the following steps:
a. definition of users possible characteristics: At the first stage, a list of users relevant characteristics, is prepared. The list may include the user gender, the user position within several ranges of ages (for example, the ranges of ages may be 7-12; 13-17, 17-25, 25-35, 35-45, 45-60, and 60+), the user occupation, etc. Characteristics with only one value or too many different values (e.g., ID number) are eliminated from the list. The intuition behind using user's fixed characteristics is that usage behavior of users can be differentiated by their characteristics and thus training different models for different characteristics may increase the accuracy of prediction.
b. definition of device models: a list of relevant device models is prepared. The list should include all the devices that are relevant, such as Nokia E63, Nokia E71, Motorola W230, Motorola RIZR-Z3, Samsung Omnia 1900, etc.
c. preparation for each specific device all application models and definition of the relevant goals: For each device, a preparation of all the relevant application models is made. This includes definition of the relevant goals. For example, the goals definition may include 'Send e-mail' or 'Add contact', etc..
d. recording of user actions: plurality of various types of devices are given to a training group of users, while the characteristics of each user and the device he uses are known. The usage, i.e., the various sequences of screens that each user goes through are recorded, producing a large database of usage behaviors, depending on the various known characteristics of the specific users.

In the training, the method generates a trained tree for each goal that will later be used to predict the user next step. The root of a tree is generated using all training sequences (i.e., by plurality of users) for each specific goal. These sequences form the input for the Hidden Markov Model process, which its training method is called Baum-Welch. The generated model is represented by a matrix with transition probabilities between all the screens of this application (i.e., goal). Using this matrix, the likelihood of the training sequences given that matrix is calculated. Likelihood is the sum of probabilities of all sequences given the model. The higher the likelihood is, the prediction model better represents the likelihood for transitions within each sequence. All the recordings, which include various sequences relating to several applications, as performed in several types of devices form in the root of a unified model, which also has a form of a directed graph, which includes probabilities of transitions. In the next step children levels are built. From this point and on the users' characteristics are used to generate child nodes that will provide better prediction than the parent (root). In this process, each sequence from the parent is attached to the user that created this sequence. Then, all given characteristics are examined. Initially, the process starts with the first user characteristic, and all the sequences are divided to different groups according to this characteristic values. Each such group of sequences represents users that have the same characterisitic value. The next step is to train each group using the training method of HMM. Then, the likelihood of all sequences of same characteristic value given the distribution for this value in the model is calculated and the sum over the likelihoods of all values for that characteristic is calculated. For that characteristic (attribute) a measure called Gain ratio is calculated.

Information gain is used in decision trees algorithms for estimating the characteristic's quality by the difference between the prior entropy and current entropy, given the characteristic values.

The Information gain calculated for each character is used for calculating gain ratio for each character. Then, using the gain ratio a character for splitting the next level in the tree is selected. The selected characteristic for splitting is the one that improves the most the previous level in the tree, i.e., increase the accuracy of prediction for the training set.

The same process is performed for all the characteristics given as input about the users. The characteristic with maximal gain ratio is chosen to split the parent node. This characteristic name is stored in the parent node together with a parent's hidden markov model that was generated earlier. The arcs between the parent and the child nodes contain the characteristic value. The models in the child nodes consist a model (transition matrix) that was trained using the sequences of users with that node's characteristic value. The next levels in the tree are generated in the same way until a stopping criterion is reached. Few rules of thumb may be used as stopping criteria: (1) Improvement rate of information gain between parent and child is smaller than a pre-defined threshold (2) Parameter for minimal number of sequences for building a node (i.e when less than X users with the same characteristic value accomplished a specific goal the node will become a leaf) (3) All sequences in a node belong to the same characteristic value. The same process of building a character driven HMM tree is implemented for each goal with the training sequences of that goal.

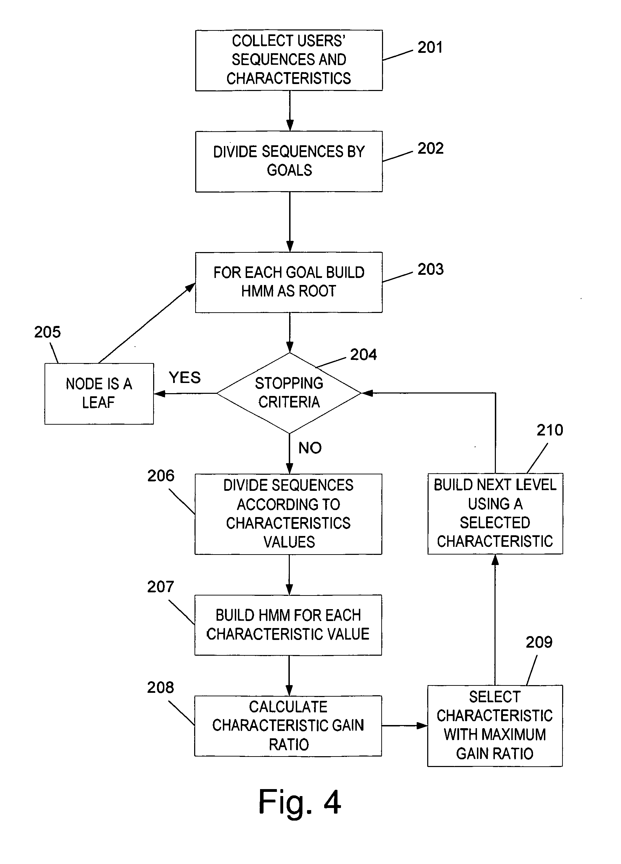

Fig. 4 is a flow diagram for the training process. In step 201, plurality of device trackers 302 are activated in plurality of various types of devices, while being used by various types of users (e.g., males in various age ranges, females in various age ranges, children, people of various occupations, etc.) and each of these trackers 302 records and stores in the various devices the activities of the users during some period of time. The various stored sequences of actions are collected from all the devices that are used in the training process, while each sequence is associated with the known corresponding characteristics of the user who operated the device. After collecting, all sequences are divided 202 according to the goal of each sequence. For each goal, a transition matrix is generated in step 203 using a training method such as HMM on all the sequences used for reaching a same specific goal. This transition matrix contains all transition probabilities between the tasks various screens. After generating the matrix, it is saved in the root of the goal prediction tree. The next step 204 checks whether a stopping criterion is reached. Several rules may be used as stopping criteria. For example, the training process stops once the improvement rate of information gain between parent and child is smaller than a pre-defined threshold. Another parameter affecting the stopping criteria is the number of sequences for building a user prediction model (i.e. when less than a predefined number of users with the same characteristic value accomplished a specific goal, the user prediction model is stored 205 as a leaf in the goal prediction tree. Another condition that stops the process is when all the sequences in a node belong to the same characteristic value. The general rule is that when a stopping criterion applies, the current node is determined to be a leaf 205. In the case that a stopping criterion does not apply, children levels are built using users' characteristics. The idea is that a child node provides better prediction than a parent one. It should be noted that each node in the goal prediction tree is a user prediction model such as of Fig. 2, which is generated for a specific collection of user characters (and a specific device). In the next step 206 all the sequences are divided to different groups according to the subscribers' characteristics values. Each such group of sequences represents users that have the same characteristic value.

The next step 207 generates a HMM model from each sequence group using a training method, Baum- Welch. In this step, one characteristic is selected for splitting the next level. The selected characteristic is the one which most improves the previous level in the tree, i.e., the one which most increases the accuracy of prediction for the training set. The improvement may be measured by calculating the likelihood of each group of sequences (having a same characteristic value) given the model of this value. Then, the sum over the likelihoods of all values of that characteristic is calculated and the gain ratio is measured. One way of calculating the gain ratio is to calculate the difference between the parent's likelihood and this characteristic value likelihood, and to divide this by a measure called characteristic gain representing information about this characteristic (in general a characteristic with more values has a higher characteristic gain). In step 209 one characteristic is selected for splitting the next level. The selected characteristic is the one that increases most the accuracy of prediction for the training set (i.e., having the highest gain ratio). Once the characteristic is chosen, the next level in the tree is generated 210 in the same way until one of the stopping criteria mentioned above is reached.

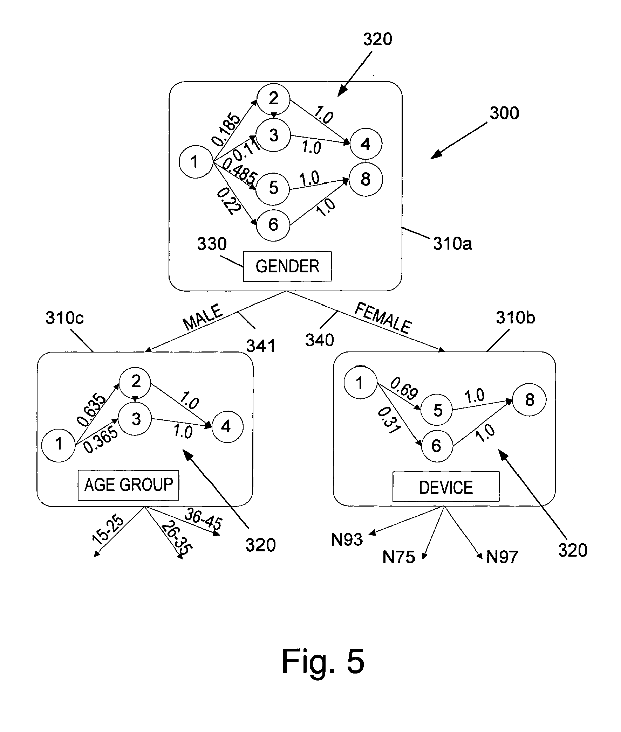

Fig. 5 is a general example of a goal prediction tree which created using the offi-line stage of the process of the present invention. The figure illustrates a hierarchical prediction tree 300 for one specific goal. Each node 310 in the tree comprises a user prediction model 320 according to some selected user characteristics 330. The user prediction model within each node 310 describes the probabilities for transitions between screens for one specific goal, and for some specific user characteristics. The lower the node in the tree, more specific user characteristics and specific device model are considered. The root node 310a comprises transitions probabilities between screens for all the users executing one specific goal. The next level in the tree comprises user prediction models that are built according to the users' gender (assuming that this is the characteristic that increases most the accuracy of prediction according to this example). The left son 310c contains user prediction models for male and the right son 310b contains user prediction models for female. For example, the transition probabilities in the left node 310a are calculated using sequences performed by males only, wherein in the right node 310b the transition probabilities are calculated using sequences performed by females only. The lowest level in the tree comprises leafs, wherein each leaf contains a most accurate user prediction model for one goal, and which is built for some specific collection of user characteristics and a device model. In the last levels the characters selected for splitting are the user age group and the user device. In this example the goal modeled is supported by the Nokia N model devices (N75, N95 etc). Therefore, leafs in the right branch 310b are split according to the devices supporting the modeled goal. Generally, the device of the user receives plurality of "leafs", one for each task which is included in the device.

Stopping criteria may sometimes cause over-fitting that eventually leads to lower prediction accuracy. The reason is that in each child node there are fewer sequences than in the parent above it. In low levels of the tree sometimes a node is generated using few sequences. These sequences may not reflect accurately usage behaviors of all the users with this characteristic value and therefore prediction of a user behavior with this characteristic value will lead to low prediction accuracy. Therefore, a pruning process may be performed after building the trees to avoid "over-fitting" with low accuracy. Candidate nodes for pruning are identified from all the trees of goals. A candidate node for pruning is a node which is not a leaf and all its children are leafs. For each node candidate for pruning, errors with and without pruning of this node are computed. A sub-tree is pruned if it contains no sub-tree that results in a lower error rate than the tree itself.

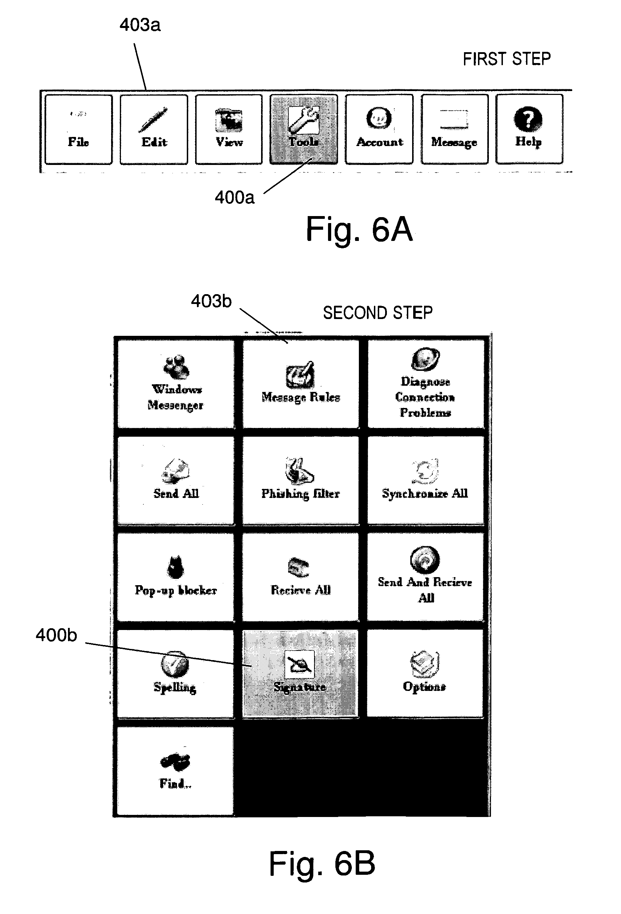

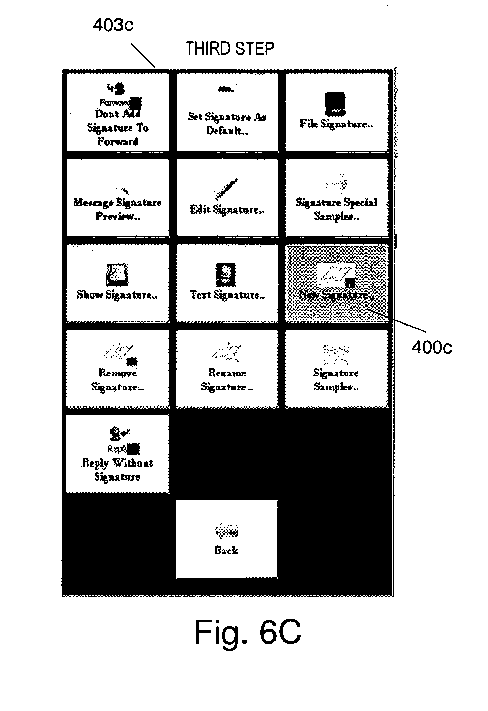

Figs 6a, 6b, and 6c illustrate respectively an example of three sequential screens, for guiding a user of a mobile phone during performance of a task. Each of the three toolbars 403a, 403b, and 403c represents a screen which is shown to the user during performance of said task. During the performance, the respective toolbar is displayed, while the item identified by the system of the invention as the predicted next step is highlighted 400a, 400b, 400c, respectively. In this manner, the user can follow the proposed (predicted) sequence, to reach the goal of the task in a more easy, friendly and efficient manner.

While some embodiments of the invention have been described by way of illustration, it will be apparent that the invention can be carried out with many modifications, variations and adaptations, and with the use of numerous equivalents or alternative solutions that are within the scope of persons skilled in the art, without departing from the spirit of the invention or exceeding the scope of the claims.

## Claims

1. A next-step prediction method for assisting a user in operating a device, which comprises:
In a training phase:
a. creating for each device at least one application model, each of said application models having a form of a directed graph,
wherein each node in the graph represents one screen of said application, wherein one or more starting screens B and one or more goal screens G are also respectively indicated in said graph, and wherein each arrow in the graph represents a screen input element for initiating transfer from one screen to a next one;
b. predefining a set of user characteristics and device types;
c. providing various types of devices to a group of training users for operation during a training period, and recording during operation of each training user of each device the corresponding sequences of screens that the user goes through;
d. having obtained plurality of said recorded screen sequences, as performed by said plurality of training users, and having knowledge of each training user characteristics, and the device he operated during said training period, creating for each device and specific collection of user characteristics, a user prediction model which provides on said application model the probabilities for transfers from each screen to a next one; and
e. installing a user prediction model within each specific device,
wherein said user prediction model is the one which best suites both the characteristics of the user who operates the device, and the specific device; and in real-time phase:
f. while operating the device by the user, tracking in real time each present screen which is displayed, and based on said user prediction model, predicting the goal that the user wishes to accomplish, and further determining for each presently displayed screen the next screen that the user most likely need s according to the transfer probabilities in said user prediction model, and providing guidance for the user to proceed to said next screen.

2. Method according to claim 1, wherein the preparation of the user prediction model is performed using a Hidden Markov Model.

3. Method according to claim 1, wherein each user prediction model has a form of a directed graph, and includes:
- indication of all screens;
- arrows indicating possible transfers between screens;
- probability for each transfer between screens, based on a specific collection of user characteristics and on the specific model the device.

4. Method according to claim 1, wherein the specific collections of user characteristics selected for building said user prediction models in the training phase are those providing the highest gain ratio.

5. Method according to claim 1, wherein the goal which is predicted as the one that the user wishes to accomplish is the one having maximum likelihood given the user prediction model and one or more of the real time tracked screens.

6. Method according to claim 5, wherein the calculation of said maximum likelihood is performed using Forward-Backward algorithm.

7. A prediction system for assisting a user in operating a device, which comprises:
a. at least one application model, each application model having a form of a directed graph, wherein each node in the graph represents one screen of said application, wherein one or more starting screens B and one or more goal screens G are also respectively indicated in said graph, and wherein each arrow in the graph represents a screen input element for initiating transfer from one screen to a next one;
b. a user prediction model, which indicates on each arrow of the application model showing a possible transfer by the user from one screen to a next one the probability for this transfer in comparison with other options that the user has, and wherein this user prediction model is specifically made to suit the known characteristics of the user and the specific device model; and
c. A device tracker for tracking in real time the present screen which is displayed to the user, submitting indication for said present screen to said user prediction model, extracting from said user prediction model the one or more probabilities for the possible transfers from this present screen to the next ones, and displaying indication to the user for the next screen which he will most likely needs to activate.

8. System according to claim 4, wherein the next screen indication shows the button on which the user has to press in order to transfer to said next screen which he will most likely needs to activate.

9. System according to claim 4, wherein the next screen, when displayed, is modified to include screen elements that the user most likely wishes to reach, based on the predicted goal.
